# EUROPEAN PATENT APPLICATION

(11) **EP 1 637 552 A1**
(43) Date of publication of application: **22.03.2006**
(21) Application number: 03741121.2
(22) Date of filing: 25.06.2003
(51) Int. Cl.: C08G 18/32, C09D 175/04

(54) **AQUEOUS EMULSION OF ULTRAVIOLET-ABSORBING RESIN AND EMULSION RESIN COMPOSITION**

(71) Applicant: DAICEL CHEMICAL INDUSTRIES, LTD., Sakai-shi, Osaka 590-0905 (JP)
(72) Inventor: INOKAMI, Kiyotaka, Takasago-shi, Hyogo 671-0122 (JP)
(74) Representative: Grünecker, Kinkeldey, Stockmair & Schwanhäusser Anwaltssozietät
(86) International application number: PCT/JP2003/008014
(87) International publication number: WO 2005/000933

(57) **Abstract**

An aqueous ultraviolet-absorbing resin emulsion, and an aqueous resin emulsion composition containing the emulsion is provided, wherein the emulsion is excellent in compatibility with a synthetic resin and light resistance. Also, the emulsion improves stability in blending with an aqueous emulsion of the synthetic resin, and prevents bleed out of the ultraviolet-absorbing resin on the surface of a coating film. Further, the aqueous ultraviolet-absorbing resin emulsion imparts excellent alkali or solvent resistance to a synthetic resin poor in alkali or solvent resistance. More specifically, an aqueous resin emulsion composition comprising (I) an aqueous ultraviolet-absorbing resin emulsion and (II) an other aqueous resin emulsion is provided, wherein the emulsion (I) is obtained by urethanizing (A) a polyol component having an ultraviolet-absorbing group {e.g., 1,1-bis[3-(2H-benzotriazol-2-yl)-4-hydroxy-benzeneethanol]methane}, (B) a polyol if necessary, (C) an alkyl or aryl dialkanolamine compound, and (D) an organic polyisocyanate in (E) an organic solvent, diluting the reaction mixture with (F) an organic solvent having a boiling point lower than 100°C to give a resin solution, neutralizing the resin solution with (G) a neutralizing agent, and dispersing the resultant in water.

## Description

### TECHNICAL FIELD

The present invention relates to an aqueous (or water) emulsion of an ultraviolet-absorbing resin, and an aqueous (or water) resin emulsion composition containing the emulsion, having excellent light resistance and chemical resistance.

### BACKGROUND ART

In recent years, from the viewpoint of environmental concerns, synthetic resins have been emulsified in water in various industrial fields such as automobiles, electric and electronic industries, and constructions. These aqueous (or water) emulsion resins (which mean resins contained in an aqueous emulsion, and sometimes refer to as aqueous resins) have the following disadvantages in the case where these resins are exposed to ultraviolet rays-containing light such as sunlight: these resins undergo deterioration or discoloration due to the ultraviolet rays, or cause decrease in molecular weight, resulting in decrease in strength thereof.

In order to improve the durability of the aqueous emulsion resin to ultraviolet rays (light resistance), an ultraviolet absorber is usually added to the resin. As such an ultraviolet absorber, for example, a benzotriazole compound such as 2-(2'-hydroxy-5'-methylphenyl)benzotriazole or 5-chloro-2-(2'-hydroxy-3',5'-di-tert-butylphenyl)benzotriazole, a benzophenone compound such as 2,4-dihydroxybenzophenone or 2-hydroxy-4-octyloxybenzophenone, and others have been known.

However, since these conventional ultraviolet absorbers are low boiling compounds having low molecular weight, various disadvantages arise in the case of adding these ultraviolet absorbers to an aqueous resin. For example, in the case where the ultraviolet absorber is added to a resin in a large amount, phase separation occurs, resulting in deterioration of transparency or mechanical strength in the aqueous emulsion resin. Therefore, the ultraviolet absorber is added as less as possible. In such a small amount of the ultraviolet absorber, however, light resistance of the aqueous emulsion resin cannot be sufficiently improved. Moreover, since the ultraviolet absorbers volatilize, thermally decompose or bleed out on a film surface in the case of forming a film from the aqueous emulsion resin, it is impossible to impart a stable light resistance to the resin for a long period.

To overcome the disadvantages as mentioned above, attempts have been made to improve compatibility with a resin or prevent the ultraviolet absorber from volatilization, thermal decomposition, bleed out or the like, by adding a group having polymerizable double bond (such as a vinyl group) to the ultraviolet absorber, and polymerizing the absorber to increase a molecular weight thereof, thereby (Japanese Patent Application Laid-Open Nos. 38411/1985 (JP-60-38411A), 181360/1987 (JP-62-181360A), and 281685/1991 (JP-3-281685A)).

However, these ultraviolet-absorbing polymers also have the following disadvantages, so that the polymers still need further improvement. That is, because of poor hydrophilicity, these ultraviolet-absorbing polymers cannot stably and uniformly be mixed with an aqueous emulsion resin. Moreover, compatibility is insufficient depending on the kind of the aqueous emulsion resin, and such an insufficient compatibility weakens mechanical strength of the resin. This tendency is particularly considerable in a thermoplastic resin obtained from an aqueous emulsion of a polyolefin or an aqueous emulsion of a polyvinylidene chloride. Further, these resins do not have sufficient light resistance for a long term.

Furthermore, resins which are obtained from an aqueous emulsion of a polyvinylidene chloride, an aqueous emulsion of a polyester, an aqueous emulsion of a polyurethane resin, and the like are widely used as various coating materials or binding materials, because the resulting resins have extremely high mechanical strength. However, a polyvinylidene chloride, a polycarbonate, a polyester and a polyurethane resin undergo decomposition by an alkali component, and as a result, mechanical strength thereof decreases. Thus, further improvement in chemical resistance such as alkali resistance or solvent resistance has been required to these resins.

It is therefore an object of the present invention to provide an aqueous emulsion of an ultraviolet-absorbing resin (hereinafter sometimes referred to as "aqueous ultraviolet-absorbing resin emulsion"), and an aqueous resin emulsion composition containing the aqueous emulsion of the ultraviolet-absorbing resin and an aqueous emulsion of other resin. In such a case, the aqueous ultraviolet-absorbing resin emulsion is excellent in compatibility with a wide range of synthetic resins and imparts excellent light resistance to the synthetic resins without impairing preferred properties of the synthetic resins. Also, the aqueous ultraviolet-absorbing resin emulsion improves stability in blending (or compounding) with an aqueous emulsion of the synthetic resin, and prevents bleed out of the ultraviolet-absorbing resin on the surface of a coating film obtained from the emulsion. Further, the aqueous ultraviolet-absorbing resin emulsion imparts excellent alkali or solvent resistance to a synthetic resin poor in alkali or solvent resistances.

### DISCLOSURE OF THE INVENTION

The inventors of the present invention made intensive studies to achieve the above objects and finally found that the above objects can be resolved by using an aqueous emulsion of an ultraviolet-absorbing resin obtained fromurethanization (orurethanation) of a known ultraviolet absorber as a raw material. The present invention was accomplished based on the above findings.

That is, according to a first aspect of the present invention, there is provided an aqueous emulsion of an ultraviolet-absorbing resin obtained by
urethanizing (or urethanating) (A) a polyol component having an ultraviolet-absorbing group, (B) a polyol if necessary, (C) an alkyl or aryl dialkanolamine compound, and (D) an organic polyisocyanate in (E) an organic solvent,
diluting the reaction mixture with (F) an organic solvent having a boiling point lower than 100°C to give a resin solution,
neutralizing the resin solution with (G) a neutralizing agent, and
dispersing the resultant in water.

According to a second aspect of the present invention, in the first aspect of the invention, there is provided an aqueous emulsion of an ultraviolet-absorbing resin, wherein the polyol component (A) is a compound represented by the following formula:

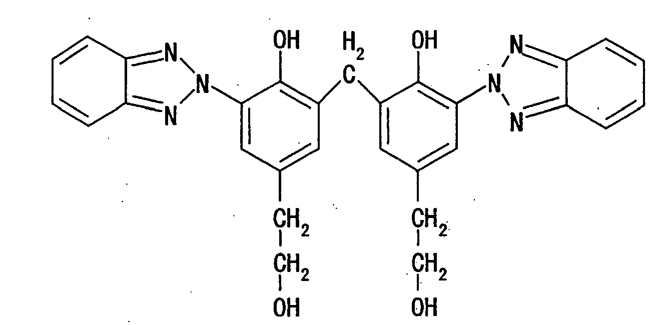

According to a third aspect of the present invention, in the first aspect of the invention, there is provided an aqueous emulsion of an ultraviolet-absorbing resin, wherein the reaction mixture is diluted with the organic solvent (F) after removing 1 to 100% of the organic solvent (E).

According to a fourth aspect of the present invention, in the second aspect of the invention, there is provided an aqueous emulsion of an ultraviolet-absorbing resin, wherein the reaction mixture is diluted with the organic solvent (F) after removing 1 to 100% of the organic solvent (E).

According to a fifth aspect of the present invention, in the first aspect of the invention, there is provided an aqueous emulsion of an ultraviolet-absorbing resin, wherein the organic solvent (F) is removed to obtain the aqueous emulsion.

According to a sixth aspect of the present invention, in the second aspect of the invention, there is provided an aqueous emulsion of an ultraviolet-absorbing resin, wherein the organic solvent (F) is removed to obtain the aqueous emulsion.

According to a seventh aspect of the present invention, in the third aspect of the invention, there is provided an aqueous emulsion of an ultraviolet-absorbing resin, wherein the organic solvent (F) is removed to obtain the aqueous emulsion.

According to an eighth aspect of the present invention, in the fourth aspect of the invention, there is provided an aqueous emulsion of an ultraviolet-absorbing resin, wherein the organic solvent (F) is removed to obtain the aqueous emulsion.

According to a ninth aspect of the present invention, in the any one of the first to eighth aspects of the invention, there is provided an aqueous emulsion of an ultraviolet-absorbing resin, wherein the content of the polyol component (A) in the ultraviolet-absorbing resin is not less than 10% by weight.

According to a tenth aspect of the present invention, there is provided an aqueous resin emulsion composition comprising (I) an aqueous emulsion of an ultraviolet-absorbing resin in any of the first to eighth aspects of the invention and (II) an aqueous emulsion of other resin.

According to an eleventh aspect of the present invention, there is provided an aqueous resin emulsion composition comprising (I) an aqueous emulsion of an ultraviolet-absorbing resin in the ninth aspect of the invention and (II) an aqueous emulsion of other resin.

### BEST MODE FOR CARRYING OUT THE INVENTION

The present invention shall now be described in detail.

### [Aqueous emulsion (I)]

The aqueous emulsion (I) of the ultraviolet-absorbing resin of the present invention is obtained by
urethanizing (A) a polyol component having an ultraviolet-absorbing group, (B) a polyol if necessary, (C) an alkyl or aryl dialkanolamine compound, and (D) an organic polyisocyanate in (E) an organic solvent,
diluting the reaction mixture with (F) an organic solvent having a boiling point lower than 100°C to give a resin solution,
neutralizing the resin solution with (G) a neutralizing agent, and
dispersing the resultant in water.

### [(A) Polyol component having an ultraviolet-absorbing group]

The above-mentioned polyol component (A) having an ultraviolet-absorbing group may preferably include a triazole ring-containing polyol, for example, 1,1-bis[3-(2H-benzotriazol-2-yl)-4-hydroxy-benzeneetha nol]methane represented by the above formula (1). The polyol component (A) preferably includes an ultraviolet absorber containing the compound represented by the formula (1) as an active ingredient. As the polyol component (A), a synthetic product or a commercial item may be used.

Incidentally, the content of the polyol component (A) is not less than 10% by weight, and preferably of 40 to 70% by weight, in the ultraviolet-absorbing resin.

### [(B) Polyol]

The above-mentioned polyol (B) is an optionally added component. Examples of the polyol (B) may include a polyester polyol, a polyether polyol, a polycarbonate polyol, a poly(meth) acryl polyol, a polyalkyl polyol, and a polyalkylene polyol. These polyols may be used singly or as a mixture of two or more polyols.

The polyol (B) is added in an amount of 0 to 200 parts by weight, and preferably 0 to 100 parts by weight relative to 100 parts by weight of the component (A).

### [(C) Alkyl or aryl dialkanolamine compound]

The above-mentioned alkyl or aryl dialkanolamine compound (C) may include a lactone adduct using N-methyldiethanolamine, N-ethyldiethanolamine, N-phenyldiethanolamine, N-ethyldiethanolamine or the like as an initiator.

Examples of the lactone may include ε-caprolactone, trimethyl-ε-caprolactone, monomethyl-ε-caprolactone, γ-butyrolactone, δ-valerolactone, and others. The number of moles of the lactone to be added to 1 mol of the initiator is 1 to 10 mol, and preferably 1 to 6 mol. The component (C) is added in an amount of 4 to 25 parts by weight, and preferably 8 to 15 parts by weight relative to 100 parts by weight of the component (A).

### [(D) Organic polyisocyanate]

The above-mentioned organic polyisocyanate (D) may include an aromatic diisocyanate such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, diphenyldimethylmethane diisocyanate, dibenzyl diisocyanate, naphthylene diisocyanate, phenylene diisocyanate, xylene diisocyanate, or tetramethylxylylene diisocyanate; an aliphatic diisocyanate such as tetramethylene diisocyanate, hexamethylene diisocyanate, lysine diisocyanate, 2-methylpentane-1,5-diisocyanate, 3-methylpentane-1,5-diisocyanate, or 2,2,4-trimethylhexane-1,6-diisocyanate; an alicyclic diisocyanate such as isophorone diisocyanate, cyclohexyl diisocyanate, hydrogenated xylylene diisocyanate, hydrogenated diphenylmethane diisocyanate, or hydrogenated trimethylxylylene diisocyanate; and others.

These organic polyisocyanates may be used singly or as a mixture of two or more organic polyisocyanates. Further, as the organic polyisocyanate (D), a modified product such as an adduct-modified product, a carbodiimide-modified product, an allophanate-modified product, a biuret-modified product, a urethodion-modified product, a urethoimine-modified product, or an isocyanurate-modified product of the organic polyisocyanate may also be used.

Among these organic polyisocyanates, hexamethylene diisocyanate, isophorone diisocyanate, hydrogenated xylylene diisocyanate, and hydrogenated diphenylmethane diisocyanate are preferred from the viewpoint of light resistance.

The amount of the organic polyisocyanate (D) is 0 .7 to 1. 4 equivalents, and preferably 0.8 to 1.2 equivalents, in terms of an isocyanate group, relative to the total amount of the active hydrogen in the components (A), (B) and (C).

### [(E) Organic solvent and (F) Organic solvent]

The above-mentioned organic solvent (E) to be used for the reaction may include formamide, N,N-dimethylformamide, dimethylsulfoxide, dimethylsulfone, sulfolane, 2,4-dimethylsulfolane, N-methylpyrrolidone, and others. These organic solvents

### (E) may be used singly or as a mixture of two or more organic solvents.

The amount to be used of the organic solvent (E) is 0.4 to 2 times, and preferably 0.7 to 1 time relative to 100 parts by weight of the resulting ultraviolet-absorbing resin (non-volatile (or solid) content).

The organic solvent (F) to be used for dilution may include acetone, methyl ethyl ketone, tetrahydrofuran, and others. These organic solvents (F) may be used singly or as a mixture of two or organic solvents.

The amount to be used of the organic solvent (F) is 0.7 to 2.3 times, and preferably 0.9 to 1.5 relative to 100 parts by weight of the resulting ultraviolet-absorbing resin (non-volatile (or solid) content).

### [(G) Neutralizing agent]

Examples of the above-mentioned neutralizing agent (G) may include an inorganic acid such as hydrochloric acid, sulfuric acid or nitric acid; an organic acid such as formic acid, acetic acid, propionic acid or butyric acid; a quaternizing agent such as methyl chloride, methyl bromide, dimethyl sulfate, diethyl sulfate, benzyl chloride, p-nitrobenzyl chloride, benzyl bromide, ethylene chlorohydrin, ethylene bromohydrin, epichlorohydrin or bromobutane. These neutralizing agents may be used singly or as a mixture of two or more neutralizing agents.

The urethanization with the component (A), the component (B), the component (C) and the organic polyisocyanate (D) is carried out in the organic solvent (E), for example, at a reaction temperature of 65°C for 12 hours.

The urethane resin solution containing thus obtained reaction mixture, from which if necessary 1 to 100% of the organic solvent (E) is removed with the use of, for example, an evaporator, vacuum distillation, or other means, is diluted with the organic solvent (F) having a boiling point lower than 100°C to give a resin solution. The resin solution is neutralized with the neutralizing agent (G), and the resultant is dispersed in water, if necessary, with using an emulsifier such as dodecylbenzenesulfonic acid or a polyoxymethylene nonylphenyl ether.

Accordingly, dispersion stability of the resin in water is easily improved by diluting the urethane resin solution with the organic solvent (F).

The aqueous ultraviolet-absorbing resin emulsion (I) may be used in a concentration of 5 to 60% by weight in terms of a non-volatile content.

The organic solvent (F) may be removed, if necessary, to make an aqueous emulsion free from an organic solvent. The aqueous emulsion may be further dried to give an ultraviolet-absorbing resin.

Therefore, the present invention also discloses an ultraviolet-absorbing resin obtainable from urethanization of the component (A), the component (C), the optional component (B), and the organic polyisocyanate (D).

In the present invention, in order to impart water dispersibility to the resin urethanized as described above, a quaternary ammonium salt as a hydrophilic group is introduced into the molecule of the resin. If necessary, an anionic polar group such as a carboxylic acid salt, a sulfonic acid salt, a phosphoric acid salt, or a phosphonic acid salt, a cationic polar group other than the quaternary ammonium salt, or a nonionic polar group such as an ether group may be introduced into the molecule of the resin.

### [Aqueous resin emulsion composition]

The aqueous resin emulsion composition of the present invention comprises the above-mentioned aqueous ultraviolet-absorbing resin emulsion (I) and the after-mentioned aqueous emulsion (II) of other resin (hereinafter sometimes referred to as "other aqueous resin emulsion").

The proportion of the emulsions (I) and (II) to be blended is not particularly limited to a specific one, and may be suitably selected from a wide range. The emulsion (I) : the emulsion (II) is usually 20 to 0.005:80 to 99.995, and preferably 10 to 0.1:90 to 99.9 (the total of the both emulsions is 100) in a weight ratio (in terms of a non-volatile content).

### [Other aqueous resin emulsion (II)]

The above-mentioned other aqueous resin emulsion (II) is not particularly limited to a specific one, and conventionally known emulsions may be widely used. Considering ease of addition (or mixing) of the ultraviolet-absorbing aqueous resin emulsion (I), an aqueous emulsion of a thermoplastic resin may be preferably used.

The thermoplastic resin may include, for example, a vinyl chloride, a polyvinylidene chloride, a polyolefin, a polycarbonate, a polystyrene, a (meth)acrylic resin, a polyamide, a polyester, an acrylonitrile-butadiene-styrene (ABS) resin, a polyurethane resin other than the resin used in the above-mentioned emulsion (I), a vinyl chloride-vinylidene chloride-acrylonitrile copolymer, an acrylonitrile-styrene (AS) resin, a vinyl acetate resin, a polyphenylene ether, a polysulfone, a polyether sulfone, a polyether ether ketone, a liquid crystal plastic, and others. Among them, for example, a polyvinyl chloride, a polyvinylidene chloride, a polyolefin, a polycarbonate, a polystyrene, a (meth)acrylic resin, a polyamide, a polyester, an ABS resin, a polyurethane resin, and others may be preferably used. In particular, there may be preferably used a thermoplastic resin having poor alkali resistance, such as a polyvinyl chloride, a polyvinylidene chloride, a polycarbonate, a polyester or a polyurethane resin, or a thermoplastic resin having poor solvent resistance, such as a polyamide. In the present invention, these other aqueous resin emulsions may be used singly or as a mixture of two or more emulsions.

If necessary, to the aqueous resin emulsion composition of the present invention, or the ultraviolet-absorbing aqueous resin emulsion (I) may be added at least one member of known additives such as an antioxidant, a light stabilizer, a processing stabilizer, an antiaging agent, or a compatibilizer.

The antioxidant may include, for example, a hindered phenol-series antioxidant such as 1,6-hexanediol-bis[3-(3,5-di-tert-butyl-4-hydroxypheny 1)propionate], or 3,5-di-tert-butyl-4-hydroxybenzylphosphonate-diethyl ester; an organic sulfur-series (or sulfur-containing) antioxidant such as dilauryl 3,3'-dithiodipropionate; and a phosphorus-series (or phosphorus-containing) antioxidant such as trialkylphenyl phosphate.

Examples of the light stabilizer may include a hindered amine-series light stabilizer such as bis(2,2,6,6-tetramethyl-4-piperidyl)sebacate; and a nickel salt-based light stabilizer such as nickel dibutyldithiocarbamate.

The processing stabilizer may include, for example, a phosphorus-series (or phosphorus-containing) processing stabilizer such as tris(2,4-di-tert-butylphenyl)phosphate.

Examples of the antiaging agent may include 1,1-bis(4-hydroxyphenyl)cyclohexene, and N,N'-diphenyl-p-phenylenediamine.

The amounts to be blended of these additives are not particularly limited to specific one, and usually these additives are preferably used in an amount of about 0.01 to 20% by weight relative to a non-volatile resin in the aqueous resin emulsion composition or the ultraviolet-absorbing aqueous resin emulsion (I).

The aqueous resin emulsion composition of the present invention can be used in all the applications in which an aqueous emulsion of a resin is used. In particular, the composition can suitably be used for the applications having a possibility in which the resin composition is exposed to sunlight or light containing ultraviolet rays. Examples of the applications may include glass substitutes and surface coating materials thereof; coating materials for window glasses of houses, facilities, transports or the like, lighting glasses, and light source-protecting glasses; interior and exterior materials and interior and exterior coating materials of the houses, facilities, transports or the like; members for a light source emitting ultraviolet rays, such as fluorescent lamps or mercury lamps; members for precision machines (or apparatus) or electric and electronic devices; materials for shielding electromagnetic waves generated from various kinds of displays; vessels (or containers) or wrapping materials of foods, chemicals, medicaments or the like; agricultural and industrial sheets or film materials; discoloration preventives for printed matters, dyed materials, dyes, pigments or the like; cosmetics such as sun-block creams, shampoos, rinses or hair dressings; fabric products and fibers for clothes such as sport wears, stockings, caps or hats ; household interior trims (or parts) such as curtains, carpets or wallpapers; medical instruments (or materials) such as plastic lenses, contact lenses or false eyes ; optical products such as optical filters, prisms, mirrors or photographic materials; stationery such as tapes or inks; and signs, indicators and surface coating materials thereof.

### EXAMPLES

The following examples are intended to describe this invention in further detail and should by no means be interpreted as defining the scope of the invention.

Incidentally, unless otherwise indicated, the terms "%" and "part (s) " mean "% by weight" and "the part(s) by weight", respectively.

### (Example 1)

In a glass flask equipped with a cooling pipe, a nitrogen-introducing tube, a dropping funnel, a thermometer and a stirrer were charged 240 parts by weight of N,N-dimethylformamide (DMF) and 136.4 parts by weight of 1,1-bis-[3-(2H-benzotriazol-2-yl)-4-hydroxy-benzene ethanol]methane (trade name "MBEP", manufactured by Otsuka Chemical Co. , Ltd.), and the mixture was allowed to dissolve at 80°C. Then, 80.7 parts by weight of isophorone diisocyanate (IPDI) was added dropwise to the mixture under a nitrogen atmosphere with stirring, and the reaction was carried out for 2 hours. Further, 22.9 parts by weight of N-methyldiethanolamine was added dropwise thereto, and the reaction was continued for 4 hours.

Next, the reaction mixture was heated to 95°C under a reduced pressure of 40 to 50 mmHg to remove 190 parts by weight of DMF from the reaction mixture, and diluted and dissolved with 240 parts by weight of methyl ethyl ketone (MEK). Then, 14.1 parts by weight of acetic acid was added to the resulting mixture for quaternizing a tertiary amine portion in the resulting mixture. To the resultant was added dropwise 560 parts by weight of water to form an emulsion. Methyl ethyl ketone as a solvent was removed under a reduced pressure to obtain the objective aqueous ultraviolet-absorbing resin emulsion (I-1).

This aqueous ultraviolet-absorbing resin emulsion had a concentration of a non-volatile (or solid) content of 37% and an average particle size of 160 nm (hereinafter, an average particle size was measured with a light-scattering particle size measurement device, trade name "ELS-800", manufactured by Otsuka Electronics Co., Ltd.).

### (Example 2)

In the same device as Example 1, 240 parts by weight of N-methylpyrrolidone (NMP) and 136.4 parts by weight of the ultraviolet absorber MBEP used in Example 1 were charged, and allowed to dissolve at 80°C. Then, 80.7 parts by weight of isophorone diisocyanate (IPDI) was added dropwise to the mixture with stirring under a nitrogen atmosphere, and the reaction was carried out for 2 hours. Further, 22.9 parts by weight of N-methyldiethanolamine was added dropwise thereto, and the reaction was continued for 4 hours. The reaction mixture was heated to 95°C under a reduced pressure of 40 to 50 mmHg to remove 190 parts by weight of DMF from the reaction mixture, and diluted and dissolved with 240 parts by weight of methyl ethyl ketone (MEK). Then, 14.1 parts by weight of acetic acid was added to the resulting mixture for quaternizing a tertiary amine portion in the resulting mixture. To the resultant was added dropwise 560 parts by weight of water to form an emulsion. Methyl ethyl ketone as a solvent was removed under a reduced pressure to obtain the objective aqueous ultraviolet-absorbing resin emulsion (I-2). This aqueous ultraviolet-absorbing resin emulsion had a concentration of a non-volatile (or solid) content of 32% and an average particle size of 256 nm.

### (Example 3 and Comparative Example 1)

To 100 parts by weight of an aqueous cationic polyurethane emulsion (trade name "F-8559D", manufactured by Dai-ichi Kogyo Seiyaku Co., Ltd.), the aqueous ultraviolet-absorbing resin (I-1) in Example 1, the aqueous ultraviolet-absorbing resin (I-2) in Example 2, or the ultraviolet absorber MBEP itself was mixed in the proportions as shown in the following Table 1. The resulting mixture was flow-cast on a Teflon-coated glass plate, and cure-dried for 14 days at a room temperature to obtain a dry film having a thickness of 100 µm.

The exposure test was conducted to the obtained film as stated below (1). After exposure for 1000 hours, the tensile strength test was conducted as described below (2). In each test, tensile elongation at break of the film was examined. In addition, the coloration of the film was observed after exposure for 2000 hours.
(1) Apparatus for exposure test, and conditions:
   A dual cycle sunshine weatherometer WEL-SUN-DC (manufactured by Suga Instrument Co., Ltd., light source: carbon arc), rainfall cycle: 18 minutes rainfall in every 120 minutes, temperature: black panel 80°C
(2) Tensile strength test: Shimadzu Autograph DSC (manufactured by Shimadzu Corp.), conditions: 200 kg/FS (full scale), cross head speed = 50 mm/min, GL (gauge length) = 30 mm
   The test results are shown in Table 1. From Table 1, it is clear that the films obtained from the emulsion of the present invention have more excellent light resistance than the conventional ones.

**Table 1**

| | Aqueous ultraviolet-absorbing resin emulsion | Parts by weight | Tensile elongation at break (%) | | Exposure test |
|---|---|---|---|---|---|
| | | | Initial stage | After 1000hrs | |
| Ex.3 | (I-1) | 1.5 | 118 | 119 | No change after 2000 hrs |
| | (I-2) | 1.5 | 115 | 114 | No change after 2000 hrs |
| Com. Ex.1 | Ultraviolet absorber MBEP | 1.5 | 106 | 31 | Colored after 1000 hrs |
| | None | - | 108 | 17 | Colored after 600 hrs |

### (Example 4 and Comparative Example 2)

The aqueous ultraviolet-absorbing resin emulsion (I-1) obtained in Example 1 or the conventional ultraviolet absorber, and an aqueous polystyrene emulsion were mixed in mixing amounts (proportions based on non-volatile contents) as shown in Table 2 to give an aqueous resin emulsion composition. The resulting composition was flow-cast on a quartz glass-made disk having a diameter of 30 mm and a thickness of 1 mm with a spin coater, and dried to form a uniform thin film having a thickness of 0.9 to 1.0 µm. The coated disk was placed in hot water at 70°C, and absorbance of the thin film at 340 nm was measured in every 2 hours. The initial absorbance (A0), the absorbance after 10 hours (A10) at 340 nm, and the absorbance retention (%, A10/A0) were shown in Table 2.

In the film using the conventional ultraviolet absorber (Comparative Example 2), the absorbance of the film was almost linearly decreased by elution of the ultraviolet absorber used in the film. On the other hand, the film using the aqueous ultraviolet-absorbing resin emulsion (I-1) obtained in Example 1 did not show elution (bleed out), and the absorbance of the film was maintained as the same level as the initial absorbance.

Moreover, the exposure test was conducted to the respective disks after 10 hours in the same manner as in Example 1. As a result, no change was visually observed in the disk obtained in Example 4 even after 500 hours. On the other hand, in the disk obtained in Comparative Example 2, yellowing was observed after 200 hours. It is therefore understood that the composition according to the present invention has stable light resistance.

### (Example 5 and Comparative Example 3)

The aqueous ultraviolet-absorbing resin emulsion (I-2) obtained in Example 2 or the conventional ultraviolet absorber, and an aqueous cationic polyurethane emulsion (trade name"F-8559D", manufactured by Dai-ichi Kogyo Seiyaku Co. , Ltd. , having a concentration of a non-volatile content of 40%) were mixed in mixing amounts (proportions based on non-volatile contents) as shown in Table 2 to give an aqueous resin emulsion composition. Using the composition, a uniform thin film having a thickness of about 1 µm was prepared and the absorbance and the absorbance retention of the film were measured in the same manner as described in Example 4. The results were shown in Table 2.

**Table 2**

| | Aqueous resin emulsion composition | Parts by weight | Upper stand: A0 | Absorbance retention (%) |
|---|---|---|---|---|
| | | | Lower stand: A10 | |
| Ex.4 | (I-1) | 75 | 0.320 | 97.0 |
| | Aqueous polystyrene emulsion | 925 | 0.310 | |
| Com. Ex.2 | Ultraviolet absorber MBEP | 75 | 0.325 | 74.8 |
| | Aqueous polystyrene emulsion | 925 | 0.243 | |
| Ex.5 | (I-2) | 87.5 | 0.469 | 97.0 |
| | F-8559D | 912.5 | 0.455 | |
| Com. Ex.3 | Ultraviolet absorber MBEP | 50 | 0.415 | 13.5 |
| | F-8559D | 950 | 0.056 | |

It was clarified from the results that the composition of the present invention hardly caused elution or bleed out of the ultraviolet-absorbing resin due to the ultraviolet-absorbing resin almost completely being retained in the other resin matrix.

### INDUSTRIAL APPLICABILITY

According to the present invention, an aqueous ultraviolet-absorbing resin emulsion, and an aqueous resin emulsion composition containing the aqueous ultraviolet-absorbing resin emulsion and an aqueous emulsion of other resin are provided, wherein the aqueous ultraviolet-absorbing resin emulsion is excellent in compatibility with a wide range of synthetic resins and imparts excellent light resistance to the synthetic resins without impairing preferred properties of the synthetic resins. In addition, the aqueous ultraviolet-absorbing resin emulsion improves stability in blending (or compounding) with an aqueous emulsion of the synthetic resin, and prevents bleed out of the ultraviolet-absorbing resin on the surface of a coating film obtained from the emulsion. Further, the aqueous ultraviolet-absorbing resin emulsion imparts excellent alkali or solvent resistance to a synthetic resin poor in alkali or solvent resistance.

## Claims

1. An aqueous emulsion of an ultraviolet-absorbing resin obtainable by
urethanizing (A) a polyol component having an ultraviolet-absorbing group, (B) a polyol if necessary, (C) an alkyl or aryl dialkanolamine compound, and (D) an organic polyisocyanate in (E) an organic solvent,
diluting the reaction mixture with (F) an organic solvent having a boiling point lower than 100°C to give a resin solution,
neutralizing the resin solution with (G) a neutralizing agent, and
dispersing the resultant in water.

2. An aqueous emulsion of an
ultraviolet-absorbing resin according to claim 1, wherein the polyol component (A) is a compound represented by the following formula:

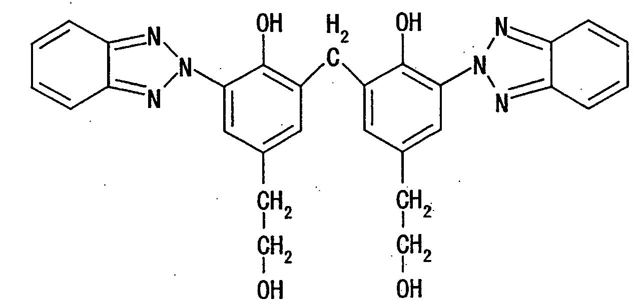

3. An aqueous emulsion of an
ultraviolet-absorbing resin according to claim 1, wherein the reaction mixture is diluted with the organic solvent (F) after removing 1 to 100% of the organic solvent (E).

4. An aqueous emulsion of an
ultraviolet-absorbing resin according to claim 2, wherein the reaction mixture is diluted with the organic solvent (F) after removing 1 to 100% of the organic solvent (E).

5. An aqueous emulsion of an
ultraviolet-absorbing resin according to claim 1, wherein the organic solvent (F) is removed to obtain the aqueous emulsion.

6. An aqueous emulsion of an
ultraviolet-absorbing resin according to claim 2, wherein the organic solvent (F) is removed to obtain the aqueous emulsion.

7. An aqueous emulsion of an
ultraviolet-absorbing resin according to claim 3, wherein the organic solvent (F) is removed to obtain the aqueous emulsion.

8. An aqueous emulsion of an
ultraviolet-absorbing resin according to claim 4, wherein the organic solvent (F) is removed to obtain the aqueous emulsion.

9. An aqueous emulsion of an
ultraviolet-absorbing resin according to any of claims 1 to 8, wherein the content of the polyol component (A) in the ultraviolet-absorbing resin is not less than 10% by weight.

10. An aqueous resin emulsion composition
comprising (I) an aqueous emulsion of an
ultraviolet-absorbing resin recited in any of claims 1 to 8 and (II) an aqueous emulsion of other resin.

11. An aqueous resin emulsion composition
comprising (I) an aqueous emulsion of an
ultraviolet-absorbing resin recited in claim 9, and (II) an aqueous emulsion of other resin.
